# EUROPÄISCHE PATENTSCHRIFT

(11) **EP 2 187 560 B1**
(45) Veröffentlichungstag und Bekanntmachung des Hinweises auf die Patenterteilung: **14.01.2015**
(21) Anmeldenummer: 09013156.6
(22) Anmeldetag: 19.10.2009
(51) Int. Cl.: H04L 7/00, H04L 7/033, H04B 1/69, H04L 12/40, H04L 7/02

(54) **Feldbussystem mit Spread-Spektrum**
Field bus system with spread spectrum
Système de bus de terrain à étalement de spectre

(30) Priorität: 14.11.2008 DE 102008057445
(43) Veröffentlichungstag der Anmeldung: 19.05.2010
(73) Patentinhaber: Phoenix Contact GmbH & Co. KG, 32825 Blomberg (DE)
(72) Erfinder: Weiß, Dominik, 31855 Aerzen (DE)
(74) Vertreter: Kampfenkel, Klaus

(56) Entgegenhaltungen:
- EP-A1- 1 037 394
- EP-A1- 1 933 494
- WO-A1-2005/103851
- US-A- 5 748 670
- US-A1- 2002 009 125
- US-A1- 2002 167 963

## Beschreibung

Die Erfindung bezieht sich auf ein Feldbussystem mit einer Anzahl von Teilnehmern, die jeweils wenigstens eine Sendeeinrichtung und eine Empfangseinrichtung aufweisen. Ferner betrifft die Erfindung ein Feldbusgerät zum Einsatz in einem solchen Feldbussystem

Aus EP 1 933 494 A1 ist ein Feldbussystem mit einer Anzahl von Teilnehmern bekannt, die jeweils wenigstens eine getaktete Sendeeinrichtung und eine getaktete Empfangseinrichtung aufweisen, um Datensignale an einen ersten, benachbarten Teilnehmer zu senden bzw. von dem ersten benachbarten Teilnehmer zu empfangen. Dabei tritt ein Teilnehmer als Master auf, um die Synchronisierung zwischen den Teilnehmern zu bewerkstelligen. Jeder Teilnehmer weist seinen eigenen lokalen Taktoszillator mit spezifischem Taktsignal auf, um mit einem Taktzyklus die Bitlänge oder Symbollänge zu steuern. Der Prozessor jeden Teilnehmers sorgt dafür, dass die Dauer jedes Datenrahmens mit mindestens einem Symbol für jeden der Teilnehmer angepasst wird, selbst wenn die lokalen Taktsignale des lokalen Taktoszillators der Teilnehmer sich voneinander unterscheiden.

Aus der EP 1 037 394 A1 ist ein Verfahren und eine Einrichtung zur Synchronisation von Feldgeräten bekannt, wobei ein Referenz-Zeitsignal mittels Spreizband- oder Spread-Spektrum-Modulation moduliert wird. Das übertragenen Zeitsignal wird in mehreren Feldgeräten jeweils durch einen Empfänger und Demodulator empfangen und zur Synchronisation einer lokalen Uhr verwendet.

Bei bisherigen Feldbussystemen werden herkömmliche Taktquellen für die Taktversorgung bei der Datenübertragung verwendet. Bei Feldbussystemen mit schneller binärer Datenübertragung gibt es Schwierigkeiten, die Verträglichkeitsgrenzen für elektromagnetische Störstrahlung einzuhalten. Auf analoge Signalformen auszuweichen, bedingt teure Geräteteile in dem Feldbussystem.

Der Erfindung liegt die Aufgabe zugrunde, ein Feldbussystem und ein Feldbusgerät zu schaffen, die für die schnelle binäre Datenübertragung ausgelegt sind, jedoch die für einen solchen Anwendungsfall zu erwartende stärkere Störaussendung vermeiden.

Ein Kerngedanke der Erfindung ist darin zu sehen, jedem Teilnehmer, auch Feldbusgerät genannt, in dem Feldbussystem ein spezifisches Spread-Spektrum-Taktsignal zuzuweisen, um Datensignale und Taktsignale in der Spread-Spektrum-Technologie an einen benachbarten Teilnehmer in dem Feldbussystem zu übertragen.

Die Spread-Spektrum-Technologie beruht darauf, dass ein Signal hinsichtlich seiner Frequenz variiert wird, wodurch ein Daten- oder Taktsignal mit variierender Bitlänge erhalten wird. Dieses spektral modifizierte Daten- oder Taktsignal führt zu geringerer Störaussendung.

Eine schnelle störsendearme binäre Datenübertragung ist mit einem Feldbusgerät nach Anspruch 1 bei einem Feldbussystem nach Anspruch 2 möglich.

Das Feldbussystem ist mit einer Anzahl von Teilnehmern vorgesehen, die jeweils wenigstens eine getakte Sendeeinrichtung und eine getaktete Empfangseinrichtung aufweisen, um Datensignale an einen ersten benachbarten Teilnehmer zu senden bzw. von dem ersten Teilnehmer zu empfangen. Weiterhin ist jedem Teilnehmer ein Spread-Spektrum-Taktgeber zum Bereitstellen eines lokalen Spread-Spektrum-Taktsignals zugewiesen, welches an der Sendeeinrichtung und der Empfangseinrichtung angelegt ist, um Datensignale synchron zum lokalen Spread-Spektrum-Taktsignal senden und empfangen zu können.

Zweckmäßiger Weise wird das lokale Spread-Spektrum-Taktsignal über eine separate Taktleitung oder mittels des gesendeten Datensignals zum jeweiligen ersten, benachbarten Teilnehmer übertragen.

Mit Kenntnis des jeweiligen lokalen Spread-Spektrum-Taktsignals lassen sich empfangene, spektral modifizierte Datensignale in der Empfangseinrichtung des jeweiligen Teilnehmers wiedergewinnen. Wenn das lokale Spread-Spektrum-Taktsignal zusammen dem spektral modifizierten Datensignal übertragen wird, steht dieses Taktsignal in der Empfangseinrichtung des jeweiligen Teilnehmers zur Verfügung und kann zur Datendecodierung verwendet werden.

Um eine bidirektionale, getaktete Datenübertragung zu ermöglichen, weist wenigstens einer der Teilnehmer eine weitere getaktete Sendeeinrichtung und eine weitere getaktete Empfangseinrichtung zum Senden von Datensignalen an einen zweiten, benachbarten Teilnehmer und zum Empfangen von Datensignalen von dem zweiten, benachbarten Teilnehmer auf, wobei an der weiteren Sendeeinrichtung und der weiteren Empfangseinrichtung das lokale Spread-Spektrum-Taktsignal des zweiten Teilnehmers anliegt.

Um das lokale Spread-Spektrum-Taktsignal des zweiten, benachbarten Teilnehmers über eine separate Taktleitung empfangen zu können, weist der wenigstens eine Teilnehmer eine entsprechend ausgebildete Schnittstelle auf.

Wird das lokale Spread-Spektrum-Taktsignal des zweiten, benachbarten Teilnehmers nicht über eine separate Taktleitung, sondern mittels des gesendeten Datensignals übertragen, weist der wenigstens eine Teilnehmer eine Taktrückgewinnungsschaltung zum Gewinnen des lokalen Spread-Sprektrum-Taktsignals aus dem vom zweiten Teilnehmer kommenden Datensignal auf.

Diese Organisation im Feldbussystem ermöglicht, jeweils nur ein lokales Spread-Spektrum-Taktsignal pro Teilnehmer bereitzustellen, was den technischen Aufwand bedeutend vermindert.

Um zu sendende Daten in geeigneter Weise kodieren und kodierte Empfangssignale wieder dekodieren zu können, weisen die Sendeeinrichtungen jeweils einen Kodierer und Empfangseinrichtungen jeweils einen Dekodierer auf.

Angemerkt sei an dieser Stelle, dass der Spread-Spekrtum Taktgeber ein Spread-Spektrum-Taktsignal bereitstellen kann, dessen Frequenz innerhalb einer Spread-Periode variiert, so dass sich die Frequenz des auszusendenden Datensignals gemäß dem jeweiligen lokalen Spread-Spektrum-Taktsignal verändert.

Um das Datensignal phasenstabil kodieren oder dekodieren zu können, muss das spektral modifizierte Datensignal im jeweils richtigen Zeitpunkt abgetastet werden. Hierzu kann jeder Teilnehmer wenigstens eine Phasenregelschaltung, insbesondere eine Phase-Locked-Loop-Schaltung aufweisen, die die Phasenlage der zu sendenden und empfangenen Datensignale mit der Phasenlage des jeweiligen Spread-Spektrum-Taktsignals abgleicht.

Zweckmäßiger Weise weist jeder Teilnehmer eine programmierbare Steuereinrichtung und/oder eine Datenverarbeitungseinrichtung auf.

Ein einzelnes, als "lokal" bezeichnetes Feldbusgerät ist mit wenigstens einer getakten Sendeeinrichtung und einer getakteten Empfangseinrichtung vorgesehen, um Datensignale an ein anderes Feldbusgerät zu senden bzw. von dem anderen Feldbusgerät zu empfangen. Das Feldbusgerät weist ferner einen Spread-Spektrum-Taktgeber zum Bereitstellen eines lokalen Spread-Spektrum-Taktsignals auf, welches an der Sendeeinrichtung und der Empfangseinrichtung angelegt ist, um Datensignale synchron zum lokalen Spread-Spektrum-Taktsignal senden und empfangen zu können.

Die Erfindung wird anhand eines Ausführungsbeispiels näher beschrieben. Dabei zeigt:
- Fig. 1: ein Blockschaltbild eines Feldbussystems im Bereich eines Teilnehmers, und
- Fig. 2: Signalformen für verschiedene Schaltungspunkte im Hin- und Rücklauf von Signalen des ringförmigen Feldbussystems.

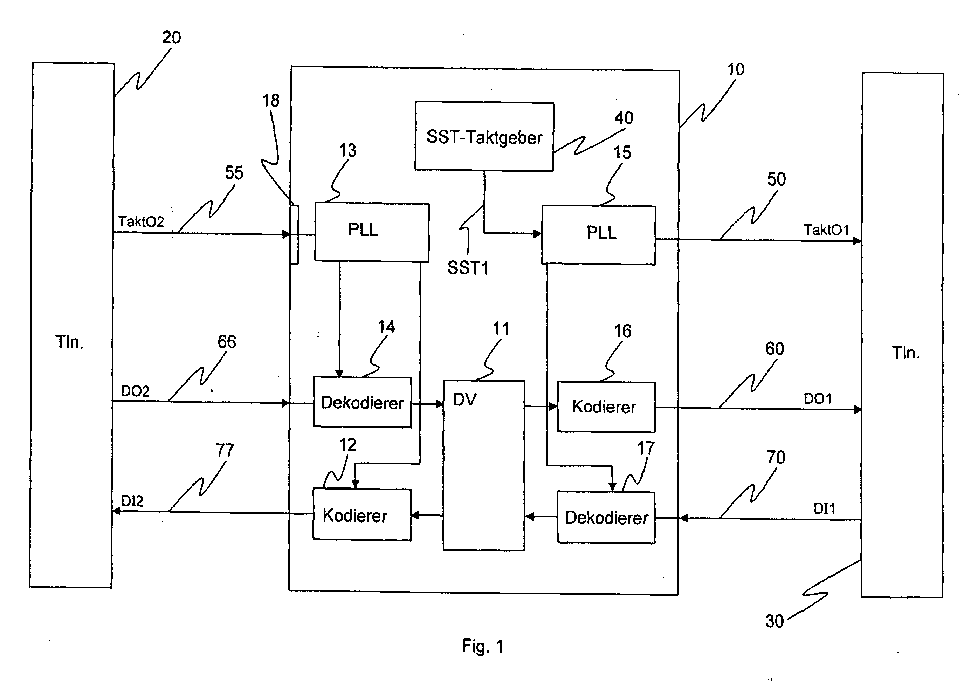

Fig. 1 zeigt beispielhaft einen Abschnitt eines ringförmigen Feldbussystems mit einem Teilnehmer 10 und zwei dazu benachbarten Teilnehmern 20 und 30, die über einen Feldbus verbunden sind. Natürlich kann das Feldbussysstem auch mehr als drei Teilnehmer aufweisen. Bei dem dargestellten Beispiel umfasst der Feldbus eine Taktleitungen 50, 55, sowie Datenleitungen 60, 66 und 70, 77 für eine bidirektionale Datenübertragung zwischen den Teilnehmern 10, 20 und 30. Die Teilnehmer werden auch als Feldbusgeräte bezeichnet. Zumindest der zwischen den Teilnehmern 20 und 30 liegende Teilnehmer 10 weist eine ankommende Schnittstelle und eine abgehende Schnittstelle auf. Die ankommende Schnittstelle enthält eine Schnittstelle 18, eine Empfangseinrichtung 14, die einen Dekodierer aufweisen kann, und eine Sendeeinrichtung 12, die einen Kodierer aufweisen kann. An der Schnittstelle 18 kommt ein Spread-Spektrum-Taktsignal an, welches im Teilnehmer 20 lokal bereitgestellt wird. Die vom Teilnehmer 20 im Rhythmus seines lokalen Spread-Spektrum-Taktsignals gesendeten Daten D02 werden über die Datenleitung 60 zur Empfangseinrichtung 14 übertragen und dekodiert. Hierzu wird das an der Schnittstelle 18 empfangene Spread-Spektrum-Taktsignal der Empfangseinrichtung 14 vorzugsweise über eine PLL-Schaltung 13 zugeführt. Für den Teilnehmer 20 bestimmte Daten DI2 werden von der Sendeeinrichtung synchron zum lokalen Spread-Spektrum-Taktsignal des Teilnehmers 20 über die Datenleitung 70 zum Teilnehmer 20 übertragen. Hierzu wird das an der Schnittstelle 18 empfangene Spread-Spektrum-Taktsignal, vorzugsweise über die PLL-Schaltung 13, dem Kodierer der Sendeeinrichtung 12 zugeführt.

Die abgehende Schnittstelle des Teilnehmers 10 weist eine Sendeeinrichtung 16 und eine Empfangseinrichtung 17 auf. Die Sendeeinrichtung 16 weist vorzugsweise einen Kodierer auf, während die Empfangseinrichtung 17 vorzugsweise einen entsprechenden Dekodierer aufweist. Weiterhin weist der Teilnehmer 10 einen Spread-Spektrum-Taktgeber 40 auf, der ein Spread-Spektrum-Taktsignal STT1 für die abgehende Schnittstelle bereitstellt. Das vom Spread-Spektrum-Taktgeber 40 bereitgestellte Spread-Spektrum-Taktsignal wird, vorzugsweise über eine PLL-Schaltung 15, der Sendeeinrichtung 16, der Empfangseinrichtung 17 und gemäß der in Fig. 1 beispielhaft gezeigten Ausführungsform einem Ausgang des Teilnehmers 10 zugeführt. Angemerkt sei an dieser Stelle, dass der Teilnehmer 20 zumindest eine abgehende Schnittstelle und einen Spread-Spektrum-Taktgeber aufweist, die der abgehenden Schnittstelle und dem Spread-Spektrum-Taktgeber des Teilnehmers 10 zumindest ähnlich sind. Teilnehmer 30 weist zumindest eine ankommende Schnittstelle auf, die der ankommenden Schnittstelle des Teilnehmers 10 zumindest ähnlich ist.

Jeder Teilnehmer kann von einer programmierbaren Steuereinrichtung (nicht dargestellt) gesteuert und überwacht werden. In an sich bekannter Weise kann jeder Teilnehmer eine Datenverarbeitungseinrichtung aufweisen. Eine solche Datenverarbeitungseinrichtung 11 ist im Teilnehmer 10 implementiert. Sie ist mit den Sendeeinrichtungen 12 und 16 und den Empfangseinrichtungen 14 und 17 verbunden.

Die Sendeeinrichtung 16 des Teilnehmers 10 überträgt synchron zum Spread-Spektrum-Taksignal SST1 Daten DO1 über die Datenleitung 60 zum Teilnehmer 30. Vom Teilnehmer 30 kommende Daten DI1 werden über die Datenleitung 70 an der Empfangseinrichtung 17 des Teilnehmers 10 empfangen. Das lokale Spread-Spektrum-Taktsignal SST1 wird über die Taktleitung 15 zum Teilnehmer 30 übertragen. Angemerkt sei, dass die Daten DI1 vom Teilnehmer 30 mittels des lokalen Spread-Spekrtum-Taktsignals SST1 des Teilnehmers 10 kodiert werden, wie dies in Verbindung mit der ankommenden Schnittstelle des Teilnehmers 10 erläutert worden ist.

Angemerkt sei, dass das Spread-Spektrum-Taktsignal SST1 nicht über die Taktleitung vom Teilnehmer 10 zum Teilnehmer 30 übertragen werden muss. Denkbar wäre auch, dass Teilnehmer 30, wie auch die übrigen Teilnehmer 10 und 20 eine Taktrückgewinnungsschaltung (nicht dargestellt) enthalten, die das Spread-Spektrum-Taktsignal SST1 aus dem über die Datenleitung 60 empfangenen, im Spektrum modifizierten Datensignal DO1 gewinnen.

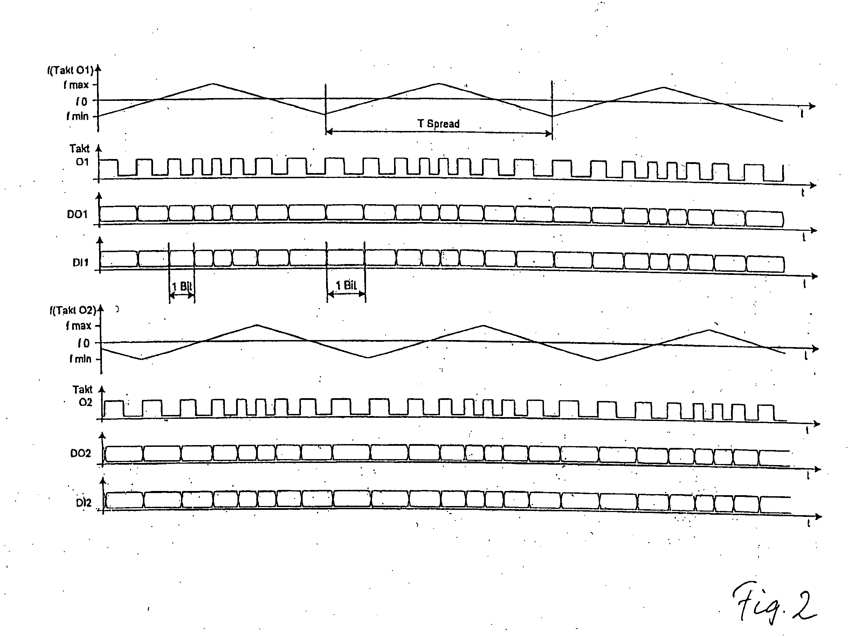

Der Betrieb des Feldbussystems wird nachfolgend in Verbindung mit den Fig. 1 und 2 näher erläutert.

Angenommen sei, dass der Teilnehmer 10 Daten DO1 zum Teilnehmer 30 übertragen möchte. Weiterhin sei angenommen, dass der Spread-Spektrum-Taktgeber 40 ein Spread-Spektrum-Taktsignal SST1 bereitstellt, dass über die PLL-Schaltung 15 der Sendeeinrichtung 16 und der Empfangseinrichtung 17 zugeführt und über die Taktleitung 50 zum Teilnehmer 30 übertragen wird. Die zu übertragenden Daten werden beispielsweise von der Datenverarbeitungseinrichtung 11 dem Kodierer der Sendeeinrichtung 16 zugeführt. Der Kodierer erzeugt unter Ansprechen auf das Spread-Spektrum-Taktsignal SST1 ein entsprechend spektral modifiziertes Datensignal, das über die Datenleitung 60 zum Teilnehmer 30 übertragen wird.

In Fig. 2 ist eine beispielhafte Modulationsfunktion f(Takt O1) dargestellt, mit der die Frequenz eines Taktsignals im Spread-Spektrum-Taktgeber 40 verändert wird, um das Spread-Spektrum-Taktsignal SST1 (in Fig. 2 mit 01 bezeichnet) zu erzeugen. Der Verlauf der Modulationsfunktion ist als eine ansteigende und abfallende Gerade über drei Spread-Perioden T dargestellt, wobei auf der Ordinate der Frequenzhub aufgetragen ist. Bei niedrigen Werten der Modulationsfunktion f ist die Frequenz des Spread-Spektrum-Taktsignals O1 niedrig, und bei hohen Werten der Modulationsfunktion f ist die Taktfrequenz höher. Die Verhältnisse sind in der Zeichnung zur Verdeutlichung übertrieben dargestellt. Die maximale Frequenz fmax bzw. die minimale Frequenz fmin weichen nur wenig von der mittleren Frequenz f0 ab, beispielsweise nur um etwa 0,2 % größer bzw. kleiner zu der mittleren Frequenz f0. Durch diese Frequenzänderung kommt es zu unterschiedlichen Impulslängen im Spread-Spektrum-Taktsignal O1 und dazu korrespondierend zu unterschiedlichen Bitlängen im Signal DO1 und DI1. Zu beachten ist, dass das Datensignal DO1 dem Ausgangssignal der Sendeeinrichtung 16 entspricht, während das in Fig. 2 gezeigte Datensignal DI1 dem Eingangssignal der Empfangseinrichtung 17 entspricht.

Aus Gründen der vereinfachten Darstellung stimmt das Spread-Spektrum-Taktsignal O1 mit dem des Datensignals DO1 im Verhältnis 1:1 überein. In der Praxis wird jedoch eine schnellere Umsetzung bevorzugt. Beispielsweise wird eine Übersetzung eines 50MHz-Spread-Spektrum-Taktsignals O1 in 200MHz-Datensignal DO1 praktiziert. Auch die Periodendauer T des Modulationssignals ist stark untertrieben gezeichnet. In einem Praxisbeispiel betrug die Periodendauer T = 10 µs bei einer Frequenz von f0 = 100 MHz.

Nunmehr sei der Fall angenommen, dass der Teilnehmer 10 über die Datenleitung 66 Daten D02 vom Teilnehmer 20 empfängt. Gleichzeitig empfängt er auch das lokale Spread-Spektrum-Taktsignal des Teilnehmers 20 über die Taktleitung 55, mit dem das Datensignal DO2 spektral modifiziert worden ist. Fig. 2 zeigt auch dieses Spread-Spektrum-Taktsignal 02 sowie die zugehörige Modulationsfunktion f(Takt 02), ebenfalls mit steigenden und fallenden Funktionswerten, jedoch in einer anderen Phasenlage zur Taktperiode T. Demgemäß kann sich die Phasenlage der lokalen Spread-Spektrum-Taktsignale 01 und 02 der Teilnehmer 10 und 20 unterscheiden. Zu beachten ist, dass die relative Phasenlage der lokalen Spread-Spektrum-Taktsignale zufällig ist und sich ändern kann, das die Taktsignale unabhängig voneinander erzeugt werden. Folglich ist auch das Datensignal DO2 in unterschiedlicher Weise zum Datensignal DO1 spektral modifiziert. Da der Teilnehmer 10 jedoch das Spread-Spektrum-Taktsignal 02 vom Teilnehmer 20 empfängt, kann das empfangene Datensignal D02 korrekt im Dekodierer der Empfangseinrichtung 14 dekodiert und der Datenverarbeitungsschaltung 11 zugeführt werden. Zu beachten ist, dass das Datensignal DO2 dem Eingansssignal der Empfangseinrichtung 14 entspricht, während das in Fig. 2 gezeigte Datensignal DI2 dem Ausgangssignal der Sendeeinrichtung 12 entspricht.

Um Daten DI2 über die Datenleitung 77 zum Teilnehmer 20 übertragen zu können, verwendet der Teilnehmer 10 das vom Teilnehmer 20 empfangene Spread-Spektrum-Taktsignal 02 im Kodierer der Sendeeinrichtung 12. Der Teilnehmer 20 kennt natürlich sein eigenes lokales Spread-Spektrum-Taktsignal und kann somit das empfangene Datensignal DI2 dekodieren.

In ähnlicher Weise kann Teilnehmer 30 Daten zum Teilnehmer 10 übertragen. Hierzu wird in einem Kodierer des Teilnehmers 30 ein spektral modifiziertes Datensignal DI1 unter Ansprechen auf das lokale Spread-Spektrum-Taktsignal des Teilnehmers 10 erzeugt. Der Dekodierer der Empfangseinrichtung 17 kann dann das empfangene, spektral modifizierte Datensignal DI1 korrekt dekodieren.

Alle Varianten haben den Vorteil, dass durch die Verwendung eines Spread-Spektrum-Taktsignals in jedem Teilnehmer die Störaussendung erheblich reduziert wird, wobei ein Spread-Spektrum-Taktsignal kostengünstig erzeugt wird.

## Patentansprüche

1. Feldbusgerät zum Betrieb in einem Feldbussystem, das mehrere Teilnehmer in Reihe aufweist, darunter das Feldbusgerät als einen lokalen Teilnehmer (10) und einen ankommend geschaltenen Teilnehmer (20) sowie einen abgehend geschalteten Teilnehmer (30), umfassend:
- eine ankommende Schrittstelle (18) zum Empfang eines ankommenden Spread-Spektrum-Taktsignals von dem ankommend geschalteten Teilnehmer (20),
- eine abgehende Schnittstelle zur Abgabe eines abgehenden Spread-Spektrum-Taktsignals zu dem abgehend geschalteten Teilnehmer (30),
- eine Sende-Empfangs-Einrichtung (12, 14) für den ankommend geschalteten Teilnehmer (20),
- eine Sende-Empfangs-Einrichtung (16, 17) für den abgehend geschalteten Teilnehmer (30),
- einen lokalen Spread-Spektrum-Taktgeber (40) zum Bereitstellen eines lokalen Spread-Spektrum-Taktsignal (SST1), und
- eine Datenverarbeitungseinrichtung (11), die mit den Sendeeinrichtungen und Empfangseinrichtungen des Feldbusgerätes verbunden ist, **dadurch gekennzeichnet,**
- **dass** das lokale Spread-Spektrum-Taktsignal (SST1) unabhängig von dem Spread-Spektrum-Taktsignal (TaktO2) des ankommend geschalteten Teilnehmers (20) ist, jedoch mit der Sende-Empfangs-Einrichtung (16, 17) zur Seite des abgehend geschalteten Teilnehmers (30) kooperiert, um spektral modifizierte Datensignale (DO1) variierender Bitlänge zu erzeugen und synchron zum lokalen Spread-Spektrum-Taktsignal (SST1) zu dem abgehend geschalteten Teilnehmer (30) zu senden und korrespondierende Datensignale (DI1) mit dem lokalen Spread-Spektrum-Taktsignal (SST1) zu empfangen.

2. Feldbussystem mit einer Anzahl von Teilnehmern (10, 20, 30), darunter einen lokalen Teilnehmer (10) mit einem Feldbusgerät nach Anspruch 1 und einen ankommend geschalteten Teilnehmer (20) sowie einen abgehend geschalteten Teilnehmer (30),
**dadurch gekennzeichnet,**
**dass** jedem Teilnehmer (10, 20, 30) ein spezifischer Spread-Spektrum-Taktgeber (40) zum Bereitstellen eines Teilnehmer-spezifischen Spread-Spektrum-Taktsignals zugewiesen ist,
**dass** die Datensignale spektral modifiziert werden, um Datensignale variierender Bitlänge zu erhalten,
**dass** das jeweilige Teilnehmer-spezifische Taktsignal an der Sendeeinrichtung und der Empfangseinrichtung des jeweiligen Teilnehmers angelegt ist, um Datensignale (DO1, DI1, DO2, DI2) synchron zum Spread-Spektrum-Taktsignal senden und empfangen zu können, und
**dass** der lokale Teilnehmer (10) sein spezifisches Spread-Spektrum-Taktsignal (SST1) an den abgehend geschalteten Teilnehmer (30) überträgt und dieses Spread-Spektrum-Taktsignal (SST1) bei diesem Teilnehmer (30) zum Empfangen von Daten sowie zum Senden von Daten an den lokalen Teilnehmer (10) verwendet wird.

3. Feldbussystem nach Anspruch 2,
**dadurch gekennzeichnet, dass**
das Spread-Spektrum-Taktsignal (SST1) des lokalen Teilnehmers (10) über eine separate Taktleitung (50) oder mittels des gesendeten Datensignals (DO1) zu dem abgehend geschalteten Teilnehmer (30) übertragen wird.

4. Feldbussystem nach Anspruch 3,
**dadurch gekennzeichnet, dass** der lokale Teilnehmer (10) eine weitere getaktete Sendeeinrichtung (12) und eine weitere getaktete Empfangseinrichtung (14) zum Senden von Datensignalen (DI2) an den ankommend geschalteten Teilnehmer (20) und zum Empfangen von Datensignalen (DO2) von dem ankommend geschalteten Teilnehmer (20) aufweist, wobei an der weiteren Sendeeinrichtung (12) und der weiteren Empfangseinrichtung (14) das spezifische Spread-Spektrum-Taktsignal des ankommend geschalteten Teilnehmers (20) anliegt.

5. Feldbussystem nach Anspruch 4,
**dadurch gekennzeichnet, dass** die ankommende Schnittstelle (18) des lokalen Teilnehmers (10) eine separate Taktleitung (55) zum Empfangen des spezifischen Spread-Spektrum-Taktsignals des ankommend geschalteten Teilnehmers (20) aufweist.

6. Feldbussystem nach Anspruch 4 oder 5,
**dadurch gekennzeichnet, dass**
der lokale Teilnehmer (10) eine Taktrückgewinnungsschaltung zum Gewinnen des spezifischen Spread-Sprektrum-Taktsignals des ankommend geschalteten Teilnehmers (20) aus dem vom zweiten Teilnehmer (20) kommenden Datensignal (DO2) aufweist.

7. Feldbussystem nach einem der Ansprüche 2 bis 6,
**dadurch gekennzeichnet, dass**
die Sendeeinrichtungen (12, 16) jeweils einen Kodierer und die Empfangseinrichtungen (14, 17) jeweils einen Dekodierer aufweisen.

8. Feldbussystem nach einem der vorstehenden Ansprüche 2 bis 7,
**dadurch gekennzeichnet, dass**
der Spread-Spektrum Taktgeber (40) des lokalen Teilnehmers (10) ein Spread-Spektrum-Taktsignal (SST1) bereitstellt, dessen Frequenz innerhalb einer Spread-Periode (T) variiert, so dass sich die Frequenz des auszusendenden Datensignals (DO1) gemäß diesem lokalen Spread-Spektrum-Taktsignal (SST1) verändert.

9. Feldbussystem nach einem der Ansprüche 2 bis 8,
**dadurch gekennzeichnet, dass**
jeder Teilnehmer (10, 20, 30) wenigstens eine Phasenregelschaltung (13, 15) aufweist, die die Phasenlage der Datensignale (DO1, DI1; DO2, DI2) mit der Phasenlage des jeweiligen Spread-Spektrum-Taktsignals abgleicht.

10. Feldbussystem nach einem der vorstehenden Ansprüche 2 bis 9,
**dadurch gekennzeichnet, dass**
jeder Teilnehmer (10, 20, 30) eine programmierbare Steuereinrichtung und/oder eine Datenverarbeitungseinrichtung (11) aufweist.

## Claims

1. A field bus device for being operated in a field bus system that comprises a plurality of subscribers including the field bus device as a local subscriber (10) and an incoming connected subscriber (20) and an outgoing connected subscriber (30), comprising:
- an incoming interface (18) for receiving an incoming spread spectrum clock signal from the incoming connected subscriber (20);
- an outgoing interface for delivering an outgoing spread spectrum clock signal to the outgoing connected subscriber (30);
- transmitter-receiver means (12, 14) for the incoming connected subscriber (20);
- transmitter-receiver means (16, 17) for the outgoing connected subscriber (30);
- a local spread spectrum clock generator (40) for providing a local spread spectrum clock signal (SST1); and
- a data processing device (11) connected to the transmitter means and receiver means of the field bus device; **characterized in**
- **that** the local spread spectrum clock signal (SST1) is independent of the spread spectrum clock signal (TaktO2) of the incoming connected subscriber (20), but cooperates with the transmitter-receiver means (16, 17) on the side of the outgoing connected subscriber (30) to produce spectrally modified data signals (DO1) of varying bit length and to transmit them in synchronization with the local spread spectrum clock signal (SST1) to the outgoing connected subscriber (30) and to receive corresponding data signals (DI1) with the local spread spectrum clock signal (SST1).

2. A field bus system with a number of subscribers (10, 20, 30) including a local subscriber (10) with a field bus device according to claim 1 and an incoming connected subscriber (20) and an outgoing connected subscriber (30); **characterized in**
**that** each subscriber (10, 20, 30) is associated with a specific spread spectrum clock generator (40) for providing a subscriber-specific spread spectrum clock signal;
**that** the data signals are spectrally modified to obtain data signals of varying bit length;
**that** the respective subscriber-specific clock signal is applied to the transmitter means and the receiver means of the respective subscriper to be capable to transmit and to receive data signals (DO1, DI1, DO2, DI2) in synchronization with the spread spectrum clock signal; and
**that** the local subscriber (10) transfers its specific spread spectrum clock signal (SST1) to the outgoing connected subscriber (30) and this spread spectrum clock signal (SST1) is used with this subscriber (30) for receiving data and for transmitting data to the local user (10).

3. The field bus system according to claim 2, **characterized in that** the spread spectrum clock signal (SST1) of the local subscriber (10) is transferred to the outgoing connected subscriber (30) via a separate clock line (50) or by using the transmitted data signal (DO1).

4. The field bus system according to claim 3, **characterized in that** the local subscriber (10) has further clocked transmitter means (12) and further clocked receiver means (14) for transmitting data signals (DI2) to the incoming connected subscriber (20) and for receiving data signals (DO2) from the incoming connected subscriber (20), wherein the specific spread spectrum clock signal of the incoming connected subscriber (20) is applied to the further transmitter means (12) and the further receiver means (14).

5. The field bus system according to claim 4, **characterized in that** the incoming interface (18) of the local subscriber (10) includes a separate clock line (55) for receiving the specific spread spectrum clock signal of the incoming connected subscriber (20).

6. The field bus system according to claim 4 or 5, **characterized in that** the local subscriber (10) has a clock recovery circuit for recovering the specific spread spectrum clock signal of the incoming connected subscriber (20) from the data signal (DO2) arriving from the second subscriber (20).

7. The field bus system according to any of claims 2 to 6, **characterized in that** each of the transmitter means (12, 16) has an encoder and each of the receiver means (14, 17) has a decoder.

8. The field bus system according to any of the preceding claims 2 to 7, **characterized in that**
the spread spectrum clock generator (40) of the local subscriber (10) provides a spread spectrum clock signal (SST1) whose frequency varies within a spread period (T), so that the frequency of the data signal (DO1) to be transmitted varies according to this local spread spectrum clock signal (SST1).

9. The field bus system according to any of claims 2 to 8,
**characterized in that**
each subscriber (10, 20, 30) includes at least one phase locked loop circuit (13, 15) which aligns the phase position of the data signals (DO1, DI1, DO2, DI2) with the phase position of the respective spread spectrum clock signal.

10. The field bus system according to any of the preceding claims 2 to 9, **characterized in that**
each subscriber (10, 20, 30) includes a programmable control device and/or a data processing device (11).

## Revendications

1. Appareil à bus de terrain destiné à fonctionner dans un système de bus de terrain, et comprenant plusieurs abonnés en série, parmi lesquels l'appareil à bus de terrain faisant office d'abonné local (10) et un abonné connecté entrant (20) ainsi qu'un abonné connecté sortant (30), comprenant :
- une interface entrante (18) destinée à recevoir un signal d'horloge à étalement de spectre entrant de l'abonné connecté entrant (20),
- une interface sortante destinée à délivrer un signal d'horloge à étalement de spectre sortant à l'abonné connecté sortant (30),
- un dispositif émetteur-récepteur (12, 14) pour l'abonné connecté entrant (20),
- un dispositif émetteur-récepteur (16, 17) pour l'abonné connecté sortant (30),
- une horloge locale à étalement de spectre (40) destinée à fournir un signal d'horloge à étalement de spectre local (SST1), et
- un dispositif de traitement de données (11), lequel est couplé aux dispositifs d'émission et aux dispositifs de réception de l'appareil à bus de terrain, **caractérisé en ce que** :
- le signal d'horloge à étalement de spectre local (SST1) est indépendant du signal d'horloge à étalement de spectre (TaktO2) de l'abonné connecté entrant (20), mais coopère avec le dispositif émetteur-récepteur (16, 17) du côté de l'abonné connecté sortant (30), afin de produire des signaux de données (DO1) modifiés de manière spectrale et d'une longueur de bit variable, et de les envoyer de manière synchrone par rapport au signal d'horloge à étalement de spectre local (SST1) à l'abonné connecté sortant (30) et de recevoir les signaux de données correspondants (DI1) présentant le signal d'horloge à étalement de spectre local (SST1).

2. Système de bus de terrain pourvu d'un certain nombre d'abonnés (10, 20, 30), parmi lesquels un abonné local (10) comprenant un appareil à bus de terrain selon la revendication 1 et un abonné connecté entrant (20) ainsi qu'un abonné connecté sortant (30),
**caractérisé en ce que** :
une horloge à étalement de spectre spécifique (40) permettant de fournir un signal d'horloge à étalement de spectre spécifique à l'abonné est affectée à chaque abonné (10, 20, 30),
les signaux de données sont modifiés de manière spectrale, afin d'obtenir des signaux de données d'une longueur de bit variable,
le signal d'horloge respectif spécifique à l'abonné est appliqué sur le dispositif d'émission et le dispositif de réception de l'abonné respectif, afin de pouvoir émettre et recevoir des signaux de données (DO1, DI1, DO2, DI2) de manière synchrone par rapport au signal d'horloge à étalement de spectre, et
l'abonné local (10) transmet son signal d'horloge à étalement de spectre spécifique (SST1) à l'abonné connecté sortant (30) et ce signal d'horloge à étalement de spectre (SST1) pour cet abonné (30) est utilisé pour recevoir des données de l'abonné local (10) et envoyer des données à ce dernier.

3. Système de bus de terrain selon la revendication 2, **caractérisé en ce que** :
le signal d'horloge à étalement de spectre (SST1) de l'abonné local (10) est transmis à l'abonné connecté sortant (30) par l'intermédiaire d'une ligne d'impulsions d'horloge séparée (50) ou au moyen du signal de données (DO1) envoyé.

4. Système de bus de terrain selon la revendication 3, **caractérisé en ce que** :
l'abonné local (10) comprend un autre dispositif d'émission à impulsions (12) et un autre dispositif de réception à impulsions (14) destinés à envoyer des signaux de données (DI2) à l'abonné connecté entrant (20) et à recevoir des signaux de données (DO2) de l'abonné connecté entrant (20), le signal d'horloge à étalement de spectre spécifique de l'abonné connecté entrant (20) étant appliqué sur l'autre dispositif d'émission (12) et l'autre dispositif de réception (14).

5. Système de bus de terrain selon la revendication 4, **caractérisé en ce que** :
l'interface entrante (18) de l'abonné local (10) comprend une ligne d'impulsions d'horloge séparée (55) destinée à recevoir le signal d'horloge à étalement de spectre spécifique de l'abonné connecté entrant (20).

6. Système de bus de terrain selon la revendication 4 ou 5, **caractérisé en ce que** :
l'abonné local (10) comprend un circuit de rétablissement du rythme des impulsions d'horloge spécifique de l'abonné connecté entrant (20) à partir du signal de données (DO2) provenant du second abonné (20).

7. Système de bus de terrain selon l'une quelconque des revendications 2 à 6, **caractérisé en ce que** :
les dispositifs d'émission (12, 16) comprennent respectivement un codeur et les dispositifs de réception (14, 17) comprennent respectivement un décodeur.

8. Système de bus de terrain selon l'une quelconque des revendications 2 à 7, **caractérisé en ce que** :
l'horloge interne à étalement de spectre (40) de l'abonné local (10) fournit un signal d'horloge à étalement de spectre (SST1) dont la fréquence varie au cours d'une période d'étalement (T), de telle manière que la fréquence du signal de données (DO1) à émettre varie conformément à ce signal d'horloge à étalement de spectre local (SST1).

9. Système de bus de terrain selon l'une quelconque des revendications 2 à 8, **caractérisé en ce que** :
chaque abonné (10, 20, 30) comprend au moins un circuit d'asservissement de phase (13, 15), lequel aligne la position de phase des signaux de données (DO1, DI1 ; DO2, DI2) avec la position de phase du signal d'horloge à étalement de spectre respectif.

10. Système de bus de terrain selon l'une quelconque des revendications 2 à 9, **caractérisé en ce que** :
chaque abonné (10, 20, 30) comprend un dispositif de commande programmable et/ou un dispositif de traitement de données (11).
